# EUROPEAN PATENT APPLICATION

(11) **EP 2 908 233 A1**
(43) Date of publication of application: **19.08.2015**
(21) Application number: 13845310.5
(22) Date of filing: 15.08.2013
(51) Int. Cl.: G06F 3/048

(54) **USER INTERFACE DISPLAY METHOD AND DEVICE**

(30) Priority: 09.10.2012 CN 201210379856
(71) Applicant: ZTE Corporation, Shenzhen, Guangdong 518057 (CN)
(72) Inventor: WANG, Weiwei, Shenzhen Guangdong 518057 (CN); SHI, Linan, Shenzhen Guangdong 518057 (CN); TANG, Wei, Shenzhen Guangdong 518057 (CN)
(74) Representative: Modiano, Micaela Nadia
(86) International application number: PCT/CN2013/081590
(87) International publication number: WO 2014/056351

(57) **Abstract**

Disclosed are a user interface display method and device. The method comprises: setting information which is set by a user for a user interface of an application and generated in advance is acquired; and in accordance with the setting information, the user interface of the application is displayed. The present invention solves the technical problem of display inflexibility of the user interface of the application because the user cannot customize the user interface in the prior art, thereby achieving the technical effect of improving the flexibility of the user interface in the aspect of customization.

## Description

### Technical Field

The present invention relates to the field of communication, in particular to a method and device for displaying a user interface.

### Background

With the explosive growth of various application software on the intelligent terminals, while people use the application software through the intelligent terminals, the requirements to the experience of various applications become higher and higher. Especially, the pursue to the user interface is higher and higher, whether the user interface can effectively meet the use appetite of a user also gradually become a judgment standard for the user to decide whether to select to use the application, meanwhile, the comfort and freedom of the man-machine interactive operation is directly determined by the good or bad user interface.

However, in the related art, the user interface of a general application program is set in advance, and the user is unable to set or customize the user interface in a user-defined way. This will inevitably appear the condition that some use appetites of the application do not conform to the use habit of the user, the customization of the user interface is not flexible enough, and it cannot provide enough personalized intelligent customs for the user so as to realize the autonomous control of the user to the user interface of software.

Aiming at the above-mentioned problem, no effective solution has been presented.

### Summary

The present invention provides a method and device for displaying a user interface to at least solve the technical problem of display inflexibility of the user interface of the application because the user cannot customize the user interface in the prior art.

According to one aspect of the present invention, a method for displaying a user interface is provided, and the method comprises acquiring setting information which is set by a user for a user interface of an application and is generated in advance; and in accordance with the above-mentioned setting information, displaying the above-mentioned user interface of the application.

Preferably, generating the above-mentioned setting information in advance comprises: receiving a customization request from a user for customizing the user interface of the above-mentioned application; enabling the user interface displayed currently to be in an editable state in response to the customization request; adjusting a size and/or position of the user interface according to an operation on the user interface performed by the user; and taking information about the adjusted position and size of the application as the setting information and storing the setting information.

Preferably, adjusting the size and/or position of the above-mentioned user interface according to the operation on the above-mentioned user interface performed by the user comprises at least one of the following: zooming-in the whole user interface when the above-mentioned operation is determined to be an zooming-in operation; zooming-out on the whole user interface when the above-mentioned operation is determined to be a zooming-out operation; or dragging a selected region on the user interface when the above-mentioned operation is determined to be a dragging operation.

Preferably, zooming-in the whole user interface comprises when an area of an interface obtained after a selected region is zoomed in is larger than the largest area which can be displayed by a display screen, displaying the selected region in full-screen mode.

Preferably, zooming-out the whole user interface comprises when the area of the interface obtained by zooming-out the above-mentioned selected region is smaller than a pre-defined smallest area, displaying the above-mentioned selected region according to the pre-defined smallest display area.

Preferably, dragging the whole user interface comprises when the above-mentioned selected region is dragged to a boundary of the display screen, stopping moving the position of the above-mentioned selected region.

According to one aspect of the present invention, a device for displaying a user interface is provided, and the device comprises: an acquisition unit configured to acquire setting information which is set by a user for an user interface of the application and is generated in advance; and a display unit configured to display the above-mentioned user interface of the application in accordance with the above-mentioned setting information.

Preferably, the above-mentioned device further comprises a generation unit configured to generate the above-mentioned setting information in advance, and the above-mentioned generation unit comprises: a receiving module configured to receive a customization request from a user for customizing the user interface of the above-mentioned application; a setting module configured to enable the user interface displayed currently to be in an editable state in response to the customization request; an adjustment unit configured to adjust a size and/or position of the above-mentioned user interface according to an operation on the user interface performed by the user; and a storage unit configured to take information about the adjusted position and size of the above-mentioned application as the above-mentioned setting information, and to store the setting information.

Preferably, the above-mentioned adjustment unit comprises at least one of the following: a first adjustment sub-module configured to zoom-in the whole user interface when the above-mentioned operation is determined to be a zooming-in operation; a second adjustment sub-module configured to zoom-out the whole user interface when the above-mentioned operation is determined to be a zooming-out operation; or a third adjustment sub-module configured to drag a selected region on on the user interface when the above-mentioned operation is determined to be a dragging operation.

Preferably, the above-mentioned first adjustment sub-module is further configured to display the selected region in full-screen mode when an interface obtained after the above-mentioned selected region is zoomed in is larger than the largest area which can be displayed by a display screen in the process of performing zooming-in operation on the whole of the above-mentioned user interface.

In the embodiments of the present invention, the setting information is generated by the user for the user interface of the application in advance, the user interface of the application is displayed according to the setting information generated in advance, that is, the user can customize the user interface so as to solve the technical problem of display inflexibility of the user interface of the application because the user cannot customize the user interface in the prior art, thereby achieving the technical effect of improving the flexibility of the user interface in the aspect of customization and furthermore improving the user experience.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a preferable flowchart of a method for displaying a user interface according to an embodiment of the present invention;
Fig. 2 is another preferable flowchart of a method for displaying a user interface according to an embodiment of the present invention;
Fig. 3 is a preferable structural block diagram of a device for displaying a user interface according to an embodiment of the present invention;
Fig. 4 is another preferable structural block diagram of a device for displaying a user interface according to an embodiment of the present invention;
Fig. 5 is a structure diagram of a system for realizing a personalized user interface according to an embodiment of the present invention;
Fig. 6 is a preferable flowchart of a method for realizing a personalized user interface according to an embodiment of the present invention;
Fig. 7 is another preferable flowchart of a method for realizing a personalized user interface according to an embodiment of the present invention;
Fig. 8 is a schematic diagram of an initial effect of realizing a personalized user interface function according to an embodiment of the present invention;
Fig. 9 is a schematic diagram showing effects of a method for realizing a personalized user interface function according to an embodiment of the present invention;
Fig. 10 is a schematic diagram showing effects of dividing a regional division of a user interface when realizing a personalized user interface function according to an embodiment of the present invention;
Fig. 11 is a schematic diagram showing effects of dragging a selected region when realizing a personalized user interface function according to an embodiment of the present invention; and
Fig. 12 is a schematic diagram showing effects of zooming-in a selected region when realizing a personalized user interface function according to an embodiment of the present invention.

### Detailed Description of the Embodiments

The disclosure is described below with reference to the accompanying drawings and embodiments in detail. Note that, the embodiments of the disclosure and the features of the embodiments can be combined with each other if there is no conflict.

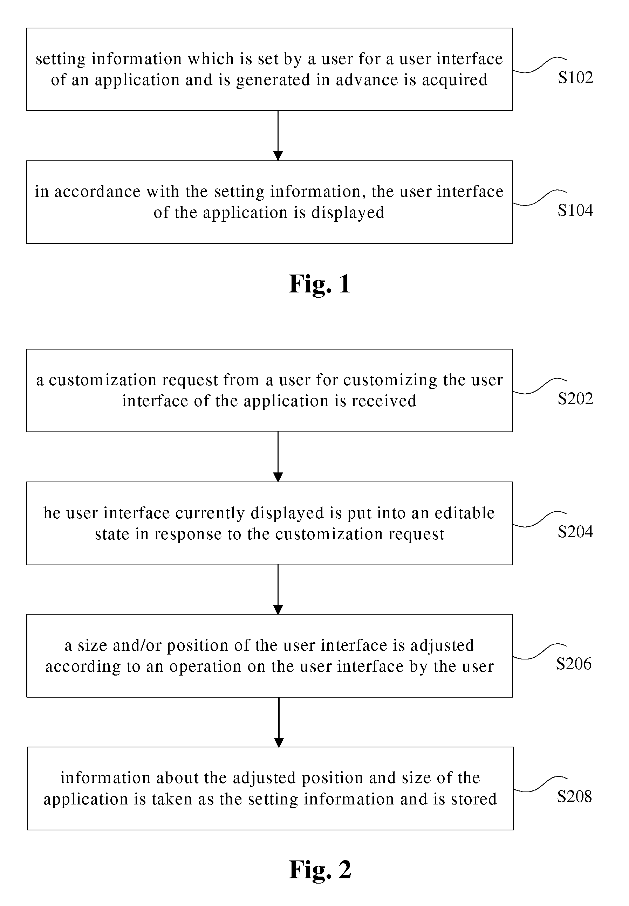

The embodiment of the present invention provides a preferable method for displaying a user interface, as shown in Fig. 1; the method comprises the following steps.

Step S102: setting information which is set by a user for a user interface of an application and is generated in advance is acquired;

Step S104: in accordance with the setting information, the user interface of the application is displayed.

In the above-mentioned preferred embodiment, the setting information is generated by the user for the user interface of the application in advance, the user interface of the application is displayed according to the setting information generated in advance, that is, the user may customize the user interface so as to solve the technical problem of display inflexibility of the user interface of the application because the user cannot customize the user interface in the prior art, thereby achieving the technical effect of improving the flexibility of the user interface in the aspect of customization and furthermore improving the user experience.

The above-mentioned setting information generated in advance may be generated according to the method as shown in Fig. 2. As shown in Fig. 2, the method comprises the following steps.

step S202: a customization request from a user for customizing the user interface of the application is received;
step S204: the user interface currently displayed is put into an editable state in response to the customization request;
step S206: a size and/or position of the user interface is adjusted according to an operation on the user interface by the user;
and step S208: information about the adjusted position and size of the application is taken as the setting information and is stored.

That is, the user may perform a personalized customization on the user interface, then the positions or sizes of the components on the user interface are set, the set positions or sizes are stored as setting information so as to achieve the effects that the user perform a personalized customization on user interface, so that the user may using the self-defined user interface when applying an application.

In the process of performing the personalized customization on the user interface, adjusting the size and/or position of the user interface is key point. For example, when it is determined that the operation is a zooming-in operation, the user interface is zoomed in; when it is determined that the operation is treatment zooming-out operation, the user interface is zoomed out; or when it is determined that the operation is a dragging operation, a selected region on the user interface is dragged.

Considering that in the process of the zooming-in operation, it is possible that multiple of zooming-in is too big to exceed the range that a display screen can display, in such a case, it is required to set a rule for the zooming-in, so that there is no problem of not being able to fully display the user interface of the application. In a preferred implementation, in the process of performing the zooming-in operation on the user interface, when an area of an interface obtained after the selected region is zoomed in is larger than the largest area which can be displayed by a display screen, the selected region is displayed in full screen mode, that is, the zooming-in is stopped automatically when the user interface is zoomed-in to fill the full screen.

Of course, in order to ensure the display effect, it also may not be displayed undersize. In a preferred implementation, in a process of performing a zooming-out operation on the user interface, when an area of an interface obtained after a selected region is zoomed out is smaller than a defined smallest area, the selected region is displayed according to a pre-defined smallest display area. Preferably, the above-mentioned smallest display area may be an original size of the application. That is, when the user interface is zoomed out, the zooming-out is stopped when the user interface is diminished to the original size.

When a dragging operation is performed on a certain region in the user interface, it also cannot be removed to the outside of the display screen. In a preferred implementation, in a process of performing a dragging operation on the selected region of the user interface, when the selected region is dragged to the boundary of the display screen, stop moving the position of the above-mentioned selected region. That is, if it is a dragging operation, in the process of performing dragging operation on the corresponding region, when the user interface is dragged to the boundary of the screen, the dragging is stopped automatically.

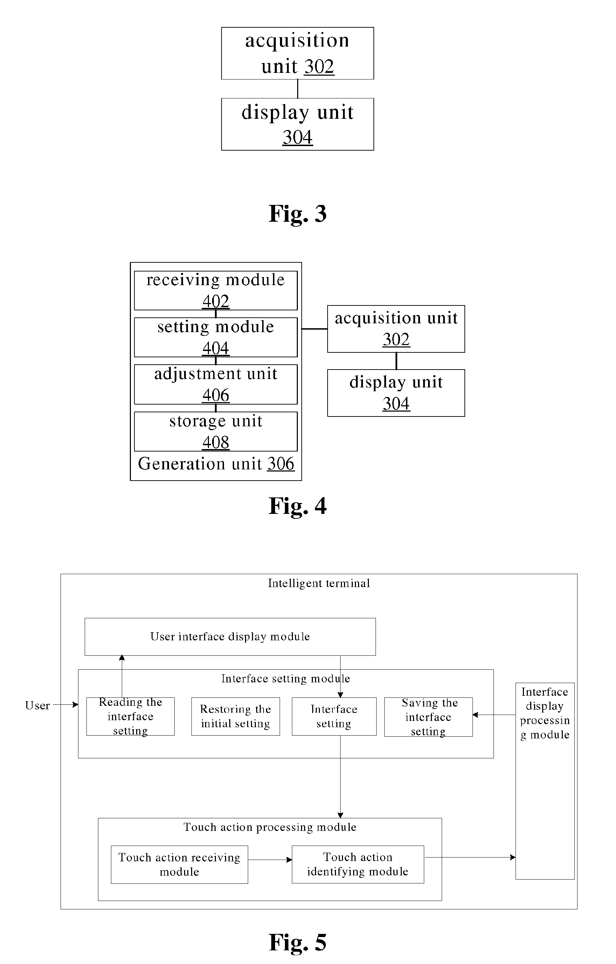

A device for displaying a user interface is also provided in an embodiment of the present invention. The device is configured to realize the above-mentioned embodiments and the preferred implementation, which has been described thereby needing no further description. As used below, the term "unit" or "module" can realize the combination of software and/or hardware with predetermined functions. Although the device described in the following embodiment is achieved preferably by software; however, hardware or the combination of software and hardware also can be possible and contemplated. Fig. 3 is a preferable structural block diagram of a device for displaying a user interface according to an embodiment of the present invention, as shown in Fig. 3, the device comprises: an acquisition unit **302** and a display unit **304**, and the structure is described below.

The acquisition unit **302** is configured to acquire information which is set by a user for a user interface of an application and is generated in advance.

The display unit **304** is coupled to the acquisition unit **302** and is configured to display the user interface of the application in accordance with the setting information.

In a preferred implementation, as shown in Fig. 4, the above-mentioned device also comprises a generation unit **306**, which is coupled with the acquisition unit **302** and is configured to generate the setting information in advance, wherein the generation unit also comprises:
a receiving module **402** configured to receive a customization request from a user for customizing the user interface of the application;
a setting module **404**, coupled with the receiving module **402** and configured to put the user interface displayed currently into an editable state in response to the customization request;
an adjustment unit **406**, coupled with the setting module **404** and configured to adjust a size and/or position of the user interface according to an operation of the user on the user interface;
and a storage unit **408**, coupled with the adjustment unit **406** and configured to take information of the adjusted position and size of the application as the setting information and to store the same.

In a preferred implementation, the adjustment unit comprises at least one of the following: a first adjustment sub-module configured to perform a zooming-in operation on the whole of the user interface when the operation is determined to be an zooming-in operation; a second adjustment sub-module configured to perform zooming-out operation on the whole of the user interface when the operation is determined to be a zooming-out operation; or a third adjustment sub-module, configured to perform a dragging operation on the whole of the user interface when the operation is determined to be a dragging operation.

The above-mentioned first adjustment sub-module is further configured to display the selected region in full-screen mode when an area of an user interface obtained after the selected region is zoomed in is larger than the largest area which can be displayed by a display screen in the process of performing a zooming-in operation on the whole of the user interface.

In the present preferred embodiment, a method and system for realizing the personalized user interface is further provided. Preferably, as shown in Fig. 5, the system for realizing the personalized user interface is provided in an intelligent terminal system, and the system comprises an interface setting module, a touch action processing module, an interface display processing module and a user interface display module.

The interface setting module comprises an interface setting reading module, an original setting restoring module, an interface setting module and an interface setting saving module. The functions of these modules are described below in detail.

The interface setting reading module is configured to read setting information of the user interface displayed currently.

The original setting restoring module is configured to restore the setting information of the user interface to be initial setting information of the application.

The interface setting module is configured to customize or personalize the user interface intelligently and.

The interface setting saving module is configured to save the customized or personalized user interface.

The touch action processing module comprises a touch action receiving module and a touch action identifying module. The touch action receiving module is configured to receive a touch input of the user and transmit same to the touch action identifying module; and the touch action identifying module is configured to perform a corresponding process and transmit the touch input to the interface display processing module for processing.

The interface display processing module is configured to receive the identified touch action, if the identified touch action is a zooming-out/zooming-in action, zoom out or zoom in the corresponding region on the user interface, when an interface is zoomed in to fill the whole screen, stop zooming-in, and when the interface is zoomed out to the original size, stop zooming-out; if it is a dragging action, drag the corresponding region on the user interface, and when the interface is dragged to a boundary of the screen, stop dragging automatically.

The user interface display module is configured to display the user interface, in particular to the personalized intelligent user interface.

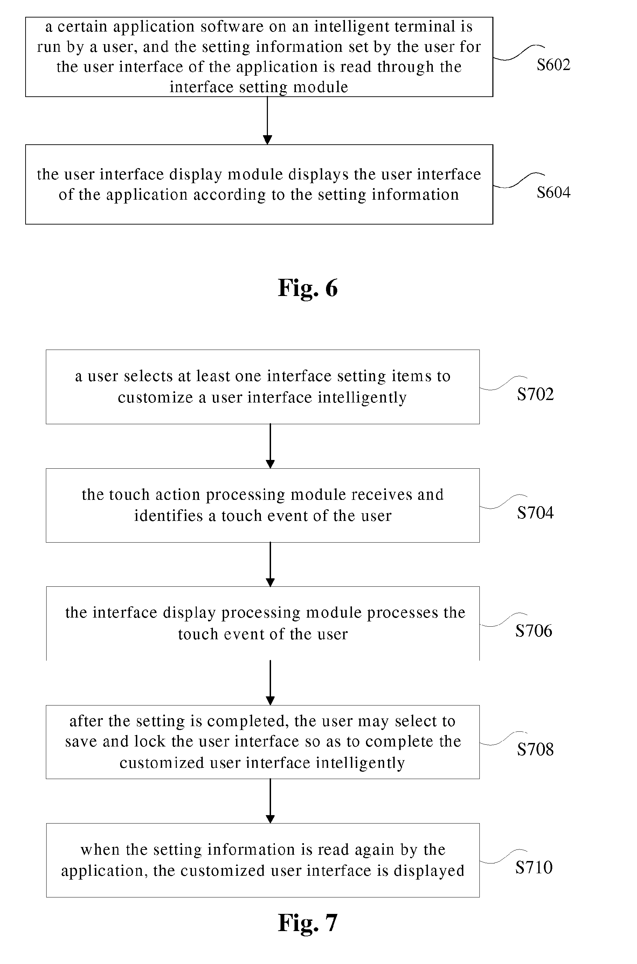

Based on the above-mentioned system structure for realizing the personalized user interface function, the embodiment of the present invention further provides a preferable method for realizing the personalized user interface function, as shown in Fig. 6, the method comprises the following steps.

Step S602: a certain application software on an intelligent terminal is run by a user, and the setting information set by the user for the user interface of the application is read through the interface setting module.

Step S604: the user interface display module displays the user interface of the application according to the setting information.

Specifically, as shown in Fig. 7, the user may generate the setting information by the following steps.

Step S702: a user selects at least one interface setting items to customize a user interface intelligently. Preferably, the user may take a certain region on the user interface or the whole user interface as an object to be customized. When the certain region on the user interface is taken as the object to be customized, the application reminds the user of the regional boundary, and the user may perform a zooming-out/zooming-in or dragging operation in the certain region; and when the whole user interface is taken as the object to be customized, the user may perform the zooming-out/zooming-in or dragging operation on the whole user interface.

Step S704: the touch action processing module receives and identifies a touch event of the user, wherein the touch action receiving module is configured to receive a touch action and transmit same to the touch action identifying module, and the touch action identifying module is configured to identify the touch action and transmit same to the interface display processing module.

Step S706: the interface display processing module processes the touch event of the user. If the touch event of the user is a zooming-out/zooming-in operation, a corresponding region on the user interface is zoomed out/zoomed in. When the zoomed-in user interface fills the whole screen, the zooming-in is stopped. When the interface is zoomed out to an original size, the zooming-out is stopped; if it is a dragging action, the corresponding region on the user interface is dragged, and when the region on the user interface is dragged to a boundary of the screen, the dragging is stopped automatically.

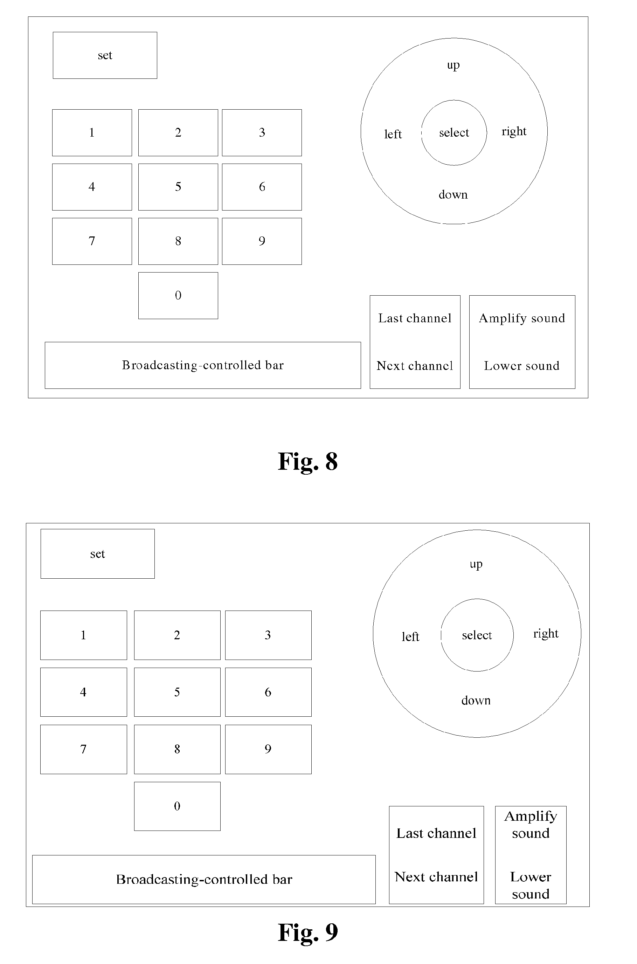

A user interface of a remote control software as shown in Fig. 8 is taken as an example, the user interface displayed comprises a setting region, a select region further comprising components for indicating up, down, left and right, a remote control bar region, a digital region and regions for controlling sound and channels.

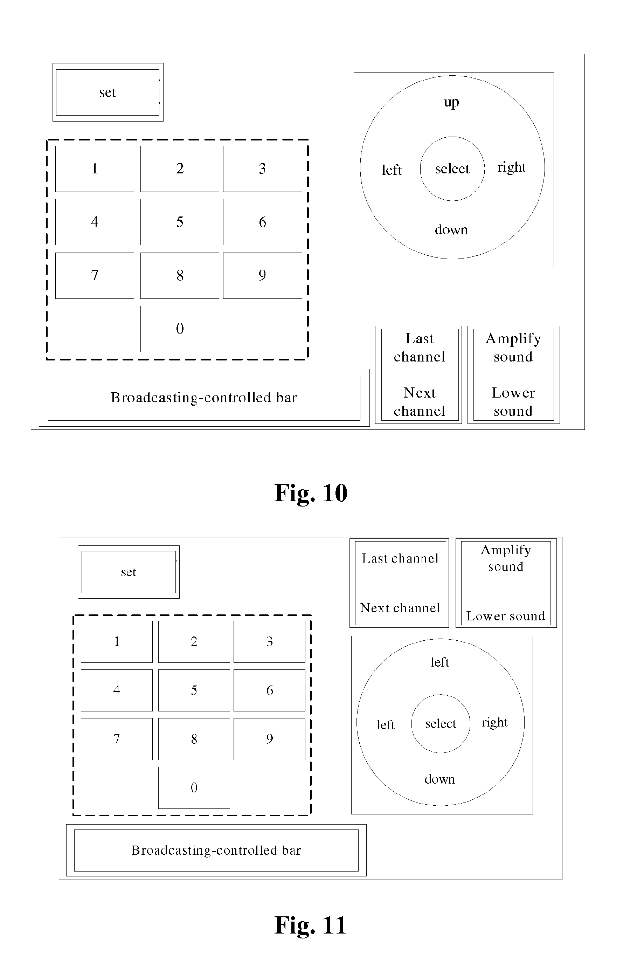

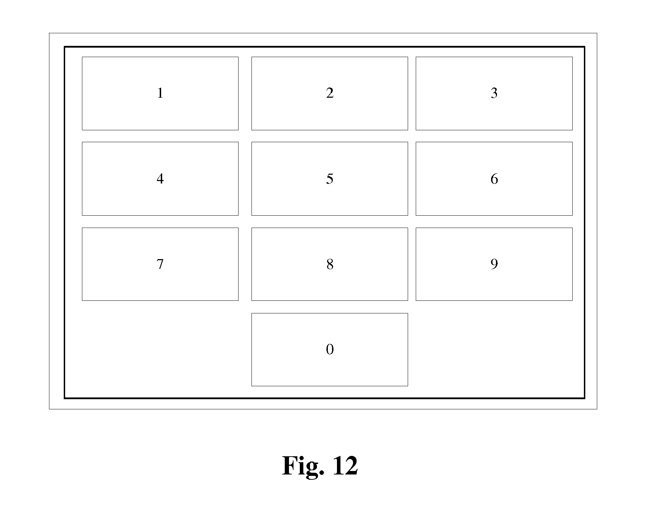

As shown in Fig. 9, it is a schematic diagram showing stopping zooming-in when a user interface is zoomed in to fill a whole screen. As shown in Fig. 10, it is a schematic diagram showing a regional division of the user interface, wherein a region is marked out using imaginary lines on the user interface. As shown in Fig. 11, a certain region is stopped dragging automatically when the certain region is dragged. Preferably, it can also be as shown in Fig. 12, a selected region is zoomed in, and the zooming-in is stopped when the region is zoomed in to fill the full screen. If the selected region is zoomed out, it is correspondingly zoomed out to the original size.

Step S708: after the setting is completed, the user may select to save and lock the user interface so as to complete the customized user interface intelligently.

Step S710: when the setting information is read again by the application, the customized user interface is displayed.

With the preferred embodiment, the personalized intelligent custom of the user interface is realized on the intelligent terminal, the interface information is read, reset, set and saved through the interface setting module of the intelligent terminal, the touch input of the user is processed by the touch action processing module of the intelligent terminal, the intelligent layout of the user interface is realized by the interface display processing module of the intelligent terminal, and the user interface is finally displayed by the interface display module of the intelligent terminal. An interface personalized intelligent custom method and system is provided for the user to simplify the operation of the user when using the software, improve the comfort and freedom of the man-machine interactive operation, improve the flexibility of the user interface customization, and also greatly improve the user experience.

In another embodiment, software is further provided, and the software is used for performing the technical solutions described in the above-mentioned embodiments and in the preferred implementation.

In another embodiment, a storage medium is further provided, the above-mentioned software is stored in the storage medium, and the storage medium comprises but not limited to optical disks, floppy disks, hard disks, removable storages, etc.

It can be seen from above description that the present invention achieves the following technical effects: the setting information is generated by the user for the user interface of the application in advance, the user interface of the application is displayed according to the setting information generated in advance, that is, the user may customize the user interface so as to solve the technical problem of display inflexibility of the user interface of the application because the user cannot customize the user interface in the prior art, thereby achieving the technical effect of improving the flexibility of the user interface in the aspect of customization and furthermore improving the user experience.

Obviously, those skilled in the art should know that each of the mentioned modules or steps of the disclosure can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the disclosure is not restricted to any particular hardware and software combination.

The descriptions above are only the preferable embodiment of the disclosure, which are not used to restrict the disclosure, for those skilled in the art, and the disclosure may have various changes and variations. Any amendments, equivalent substitutions, improvements, etc. within the principle of the disclosure are all included in the scope of the protection of the disclosure.

## Claims

1. A method for displaying a user interface, **characterized by** comprising:
acquiring setting information which is set by a user for a user interface of an application and is generated in advance; and
displaying the user interface of the application according to the setting information.

2. The method according to claim 1, **characterized in that** generating the setting information in advance comprises:
receiving a customization request from a user for customizing the user interface of the application;
enabling the user interface displayed currently to be in an editable state in response to the customization request;
adjusting a size and/or position of the user interface according to an operation on the user interface performed by the user; and
taking information about the adjusted position and size of the application as the setting information, and storing the setting information.

3. The method according to claim 2, **characterized in that** adjusting the size and/or position of the user interface according to the operation on the user interface performed by the user comprises at least one of the following:
when it is determined that the operation is a zooming-in operation, zooming in the user interface;
when it is determined that the operation is a zooming-out operation, zooming out the user interface; or
when it is determined that the operation is a dragging operation, dragging a selected region on the user interface.

4. The method according to claim 3, **characterized in that** zooming in the user interface comprises:
when an area of an interface obtained after a selected region is zoomed in is larger than the largest area which can be displayed by a display screen, displaying the selected region in full-screen mode.

5. The method according to claim 3, **characterized in that** zooming-out the user interface comprises:
when an area of an interface obtained after a selected region is zoomed out is smaller than a pre-defined smallest area, displaying the selected region according to the pre-defined smallest display area.

6. The method according to claim 3, **characterized in that** dragging the user interface comprises:
when the selected region is dragged to a boundary of the display screen, stopping moving the selected region.

7. A device for displaying a user interface, **characterized by** comprising:
an acquisition unit configured to acquire setting information which is set by a user for a user interface of an application and is generated in advance; and
a display unit configured to display the user interface of the application according to the setting information.

8. The device according to claim 7, **characterized in that** the device comprises a generation unit configured to generate the setting information in advance, wherein the generation unit comprises:
a receiving module configured to receive a customization request from a user for customizing the user interface of the application;
a setting module configured to enable the user interface displayed currently to be in an editable state in response to the customization request;
an adjustment unit configured to adjust a size and/or position of the user interface according to an operation on the user interface performed by the user; and
a storage unit configured to take information about the adjusted position and size of the application as the setting information, and to store the setting information.

9. The device according to claim 8, **characterized in that** the adjustment unit comprises at least one of the following:
a first adjustment sub-module configured to zoom-in the user interface when the operation is a zooming-in operation;
a second adjustment sub-module configured to zoom-out the user interface when it is determined that the operation is a zooming-out operation;
a third adjustment sub-module configured to drag a selected region on the user interface when it is determined that the operation is a dragging operation.

10. The device according to claim 9, **characterized in that** the first adjustment sub-module is further configured to display the selected region in full-screen mode when an interface obtained after the selected region is zoomed in is larger than the largest area which can be displayed by a display screen when zooming-in the user interface.
